Europäisches Patentamt

European Patent Office

Office européen des brevets

(11) Numéro de publication: **0 430 756 A1**

# (12) DEMANDE DE BREVET EUROPEEN

(21) Numéro de dépôt: **90403254.7**

(22) Date de dépôt: **19.11.90**

(51) Int. Cl.⁵: **G02C 5/22**

(30) Priorité: **21.11.89 FR 8915230**

(43) Date de publication de la demande:
**05.06.91 Bulletin 91/23**

(84) Etats contractants désignés:
**AT CH DE ES FR GB IT LI SE Bulletin 1**

(71) Demandeur: **ESSILOR INTERNATIONAL, Cie Générale d'Optique**
**1 Rue Thomas Edison, Echat 902**
**F-94028 Créteil Cédex(FR)**

(72) Inventeur: **Delorme, Serge**
**2 Sentier de Satelle**
**F-55300 Les Paroches(FR)**

(74) Mandataire: **CABINET BONNET-THIRION**
**95 Boulevard Beaumarchais**
**F-75003 Paris(FR)**

(54) **Charnière élastique.**

(57) Charnière élastique sans vis d'articulation.

Selon l'invention, les deux éléments (12, 13) de la charnière sont pourvus de surfaces d'articulation (12a, 13a) maintenues en contact par une pièce de liaison (15) et un ressort (16).

Application aux montures de lunettes.

## FIG.1

## CHARNIÈRE ÉLASTIQUE

L'invention se rapporte à une charnière élastique, plus particulièrement pour monture de lunettes; elle concerne surtout un agencement nouveau ne nécessitant pas de vis d'articulation.

Dans une monture de lunettes connue, chaque charnière comporte une vis d'articulation qui réalise l'assemblage des charnons mâle et femelle et matérialise aussi l'axe d'articulation de ladite charnière. Il arrive que la vis se desserre à l'insu de l'utilisateur et qu'elle finisse par tomber, ce qui entraîne le démontage de la charnière et la séparation de la branche de lunettes correspondante.

L'invention propose un nouveau type de charnière dans lequel les deux éléments articulés l'un à l'autre sont maintenus assemblés sans vis d'articulation, par des moyens élastiques et permettant en outre de mieux résister à des efforts latéraux excessifs, sans risque de rupture d'une branche ou de la charnière.

Dans ce but, l'invention concerne donc essentiellement une charnière élastique, notamment pour monture de lunettes, caractérisée en ce qu'elle comprend deux éléments creux pourvus d'évidements respectifs et comportant, à des extrémités respectives, des surfaces d'articulation, en ce que les deux évidements débouchent par des orifices en regard l'un de l'autre, en ce qu'une pièce de liaison est logée dans les deux évidements en traversant lesdits orifices, en ce qu'elle comporte une extrémité élargie en butée contre une surface interne de l'un des évidements tandis que son autre extrémité est couplée à un ressort logé dans l'autre évidement, ledit ressort étant monté avec contrainte initiale et de façon à solliciter les deux surfaces d'articulation en appui l'une contre l'autre, par l'intermédiaire de ladite pièce de liaison.

Selon un mode de réalisation préféré, le ressort est un ressort hélicoïdal monté sur ladite pièce de liaison ayant essentiellement la forme d'une tige.

L'invention sera mieux comprise et d'autres avantages de celle-ci apparaîtront plus clairement à la lumière de la description qui va suivre de plusieurs modes de réalisation d'une charnière conforme à son principe, donnée uniquement à titre d'exemple et faite en référence aux dessins annexés dans lesquels:

- la figure 1 représente une charnière conforme à l'invention, en perspective éclatée;
- la figure 2 représente la même charnière, éléments assemblés, le montage étant vu suivant une coupe perpendiculaire à l'axe de pivotement;
- la figure 3 représente une variante de la charnière, éléments assemblés, le montage étant vu suivant une coupe parallèle à l'axe de pivotement;
- la figure 4 représente une autre variante de la charnière, en perspective éclatée;
- la figure 5 est une vue analogue à la figure 3 illustrant plus particulièrement l'assemblage des éléments de la charnière, à l'aide d'un outil spécial;
- les figures 6a à 6c sont des vues partielles en coupe de cette même charnière illustrant l'assemblage; et
- la figure 7 représente cette même charnière, éléments assemblés, au début des opérations de démontage.

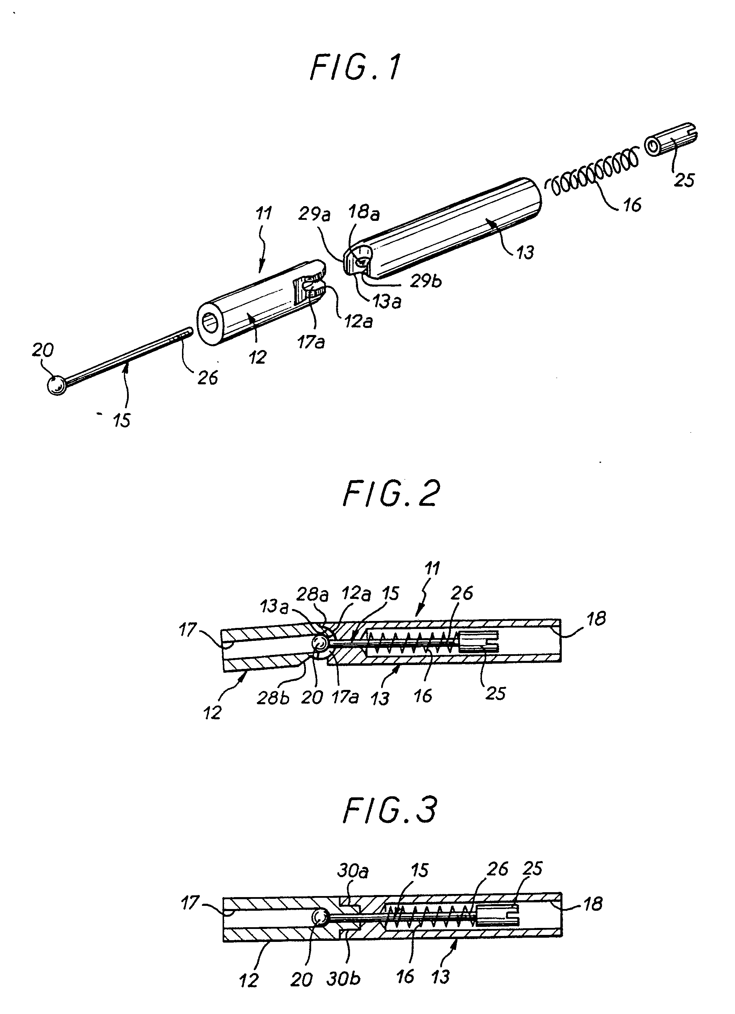

En se reportant plus particulièrement aux figures 1 et 2, on a représenté une charnière élastique 11 ici pour monture de lunettes, comprenant principalement deux éléments creux 12, 13 comportant, à des extrémités respectives, des surfaces d'articulation 12a, 13a, ici sensiblement cylindriques et comportant en outre une pièce de liaison 15 et un ressort 16. Les deux éléments creux 12, 13 sont pourvus d'évidements longitudinaux 17, 18, respectivement. La surface d'articulation 12a définie à l'extrémité de l'élément 12 est convexe tandis que la surface d'articulation 13a définie à l'extrémité de l'élément 13 est concave. Ces deux surfaces sont en appui l'une contre l'autre et ont sensiblement le même rayon de courbure de façon à définir un axe de pivotement commun, non matérialisé. L'élément 12 constitue de préférence un tenon de la face de la monture, non représentée, tandis que l'élément 13 constitue de préférence une partie d'une branche de la même monture. Les deux évidements 17, 18 débouchent, par des orifices 17a, 18a en regard l'un de l'autre, respectivement, ici sur les surfaces d'articulation 12a, 13a correspondantes. La pièce de liaison 15 est engagée dans les deux évidements et traverse donc les deux orifices 17a, 18a placés en regard. Cette pièce de liaison a essentiellement la forme d'une tige munie d'une extrémité élargie 20, laquelle est en butée contre la surface d'extrémité de l'un des évidements, ici l'évidement 17 de l'élément 12. L'extrémité élargie 20 a une forme sensiblement sphérique et l'extrémité de la surface interne de l'évidement 17 a une forme sensiblement sphérique correspondante, pour permettre l'articulation de la pièce de liaison 15 par rapport à l'élément 12. Pour ce faire, l'orifice 17a de l'élément 12 se prolonge latéralement, formant une sorte de fente vers l'intérieur de la charnière. L'autre extrémité de la pièce de liaison 15, engagée dans l'évidement 18 est couplée au ressort 16 logé dans ce même évidement. Le ressort 16 est monté avec contrainte initiale de façon à solliciter les deux surfaces d'articulation 12a, 13a, en appui l'une contre l'autre par l'intermédiaire de la pièce de liaison 15. Plus précisément, le ressort 16 est un ressort hélicoïdal installé sur la tige formant la pièce de liaison et il est monté en compression entre la surface d'extrémité de l'évidement 18 (au voisinage de l'orifice 18a) dans lequel il est logé et une butée 25 solidaire de la tige. Cette butée 25 est ici constituée par un écrou vissé sur une portion d'extrémité filetée 26 de la tige de la pièce de liaison. Cet agencement permet un réglage de la contrainte initiale du ressort. De plus, les surfaces d'articulation des deux éléments sont prolongées latéralement par des épaulements ou surfaces de butée analogues, coopérant deux à deux pour définir l'angle de pivotement normal d'un élément par rapport à l'autre. Plus précisément, l'élément 12 est pourvu, extérieurement par rapport à l'axe de la charnière, d'un épaulement 28a, droit, sur lequel vient prendre appui un bord latéral 29a externe de la surface d'articulation 13a, constituant une surface de butée correspondante. De façon analogue, l'élément 12 est pourvu intérieurement, par rapport à l'axe de la charnière, d'un épaulement 28b, incliné, sur lequel vient prendre appui un bord latéral 29b interne de la même surface 13a. Bien que l'angle de pivotement normal des deux éléments 12 et 13 soit clairement défini par les positions respectives desdits épaulements et bords latéraux, il est clair qu'un effort tendant à accentuer ce pivotement, notamment vers l'extérieur, se traduit par une compression supplémentaire du ressort 16 et un "arc-boutement" des surfaces en butée, évitant toute rupture de l'articulation.

Le fonctionnement découle avec évidence de la description qui précède. Dans les limites du pivotement normal, les deux surfaces 12a, 13a, glissent l'une contre l'autre en étant maintenues en contact par la force de compression initiale du ressort, déterminée par la position de l'écrou 25. Ce dernier, dans l'évidement 18, ne subit aucune action tendant à le dévisser ou à le visser davantage. La force de compression du ressort 16 ne varie donc pas et il n'y a aucun risque de séparation des éléments de la charnière.

Comme mentionné précédemment, un pivotement supplémentaire de la branche au niveau de la charnière est sans conséquence, puisqu'il provoque une compression supplémentaire du ressort. Tout risque de rupture est ainsi éliminé du fait qu'aucun axe de pivotement n'est effectivement matérialisé.

Dans l'exemple décrit ci-dessus, il est à noter que le glissement des éléments 12 et 13 suivant l'axe de la charnière n'est empêché que par la présence de la pièce de liaison 15 qui s'étend entre ces deux éléments. La variante de la figure 3 permet d'éviter tout effort sur la pièce de liaison dans le sens axial. Selon cette variante, où les éléments de structure analogues sont repérés par les mêmes références numériques, lesdites surfaces d'articulation sont conformées pour présenter au moins un épaulement s'étendant transversalement par rapport à l'axe commun de leurs parties cylindriques en contact, pour éviter le glissement des deux éléments l'un par rapport à l'autre, suivant cet axe.

Dans l'exemple décrit, on prévoit deux épaulements 30a, 30b s'étendant de part et d'autre de la pièce de liaison 15. En d'autres termes, de part et d'autre de cette pièce de liaison 15, il existe des surfaces cylindriques concave et convexe sur chaque élément 12, 13 de façon à définir des sortes de charnons imbriqués, ces charnons étant bien entendu dépourvus d'axe d'articulation matérialisé.

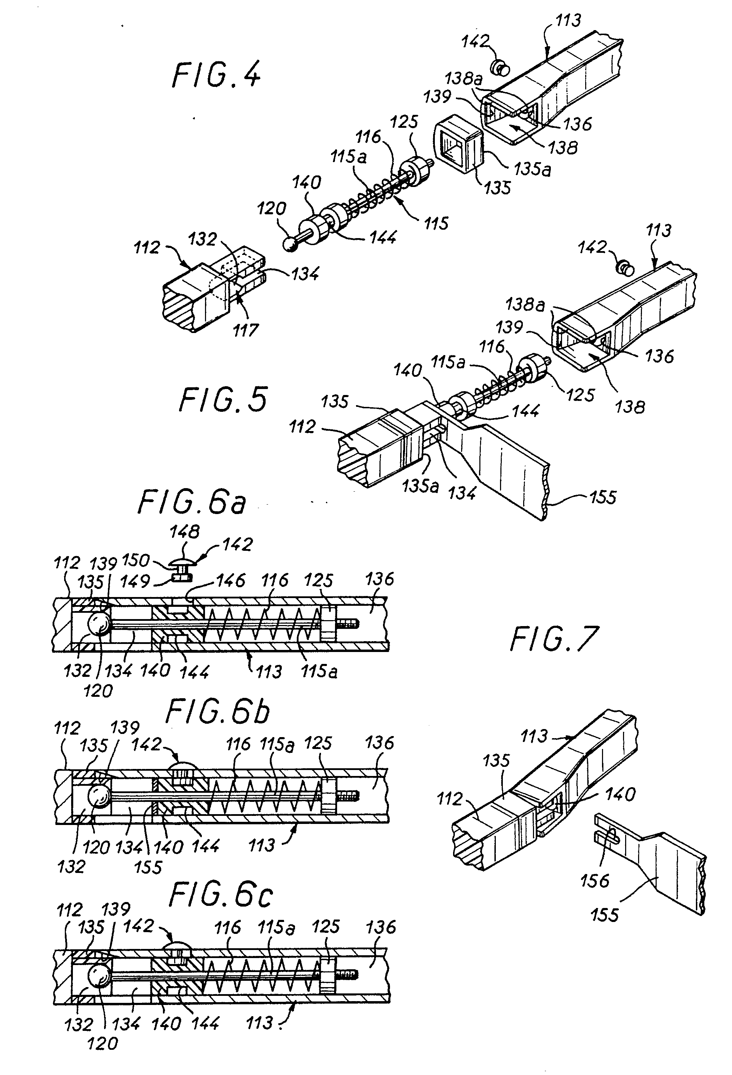

Dans le mode de réalisation des figures 4 à 7 où les éléments analogues portent les mêmes références numériques augmentées de 100, on retrouve une charnière élastique conforme à l'invention et comportant comme précédemment deux éléments creux 112, 113, une pièce de liaison 115, un ressort 116 et une butée 125 constituée par un écrou vissé sur une portion d'extrémité filetée de la tige 115a de la pièce de liaison 115. Cette dernière comporte une extrémité élargie 120, ici de forme sensiblement sphérique. Tous les éléments qui viennent d'être décrits ont globalement les mêmes fonctions que dans le mode de réalisation précédent. Les éléments creux 112 et 113 sont ici à section transversale carrée ou rectangulaire. Selon cette variante, l'évidement 117 de l'élément 112 comporte une cavité 132 conformée et dimensionnée pour accueillir l'extrémité élargie 120 et permettre son débattement. Elle est prolongée par une fente 134 conformée et dimensionnée pour accueillir une partie de la tige 115a et permettre son débattement latéral. Ces deux parties 132, 134 sont ouvertes latéralement (figure 4) pour permettre l'insertion de la pièce de liaison 115 et notamment la mise en place de l'extrémité élargie 120 dans la cavité 132 de l'évidement 117. Un élément de verrouillage 135, ici en forme de bague à section carrée ou rectangulaire est monté à l'extrémité de l'élément creux 112 pour maintenir ladite extrémité élargie 120 de l'élément de liaison dans la cavité 132. A cet effet, la portion d'extrémité de l'élément 112 a une section plus faible, ce qui définit un épaulement contre lequel l'élément de verrouillage 135 vient prendre. appui. Après montage, l'élément de verrouillage 135 fait partie intégrante de l'élément creux 112. Par ailleurs, l'autre élément creux 113 comporte à son extrémité une large cavité 138 ouverte vers l'avant et latéralement du côté de l'intérieur de la charnière et un évidement cylindrique 136 débouchant au fond de la cavité 138 et prévu pour abriter le ressort 116 et la plus grande partie de l'élément de liaison 115. La cavité 138 est conformée et dimensionnée pour abriter l'extrémité de l'élément 112 qui fait saillie au-delà de l'élément de verrouillage 135 lorsque celui-ci est en place. Par conséquent, dans ce mode de réalisation, où l'élément 112 est complété par l'élément de verrouillage 135, les surfaces d'articulation définies ci-dessus sont constituées par le bord 135a, carré ou rectangulaire de l'élément de verrouillage d'une part et par le bord 138a de l'ouverture de la cavité 138, d'autre part. Du fait que la cavité 138 est ouverte à la fois en bout et latéralement, le bord 138a formant surface d'articulation s'étend dans deux plans sensiblement perpendiculaires entre eux. La paroi latérale de la cavité 138, opposée à l'ouverture, comporte une facette 139 faisant un certain angle avec l'axe de l'évidement cylindrique 136, de façon à permettre un certain débattement supplémentaire de l'élément 113, vers l'extérieur de l'articulation, c'est-à-dire au-delà de la position stable pour laquelle les éléments 112 et 113 sont sensiblement alignés. Ce débattement supplémentaire est visible sur la figure 7.

Un organe de butée 140 est monté coulissant sur la tige 115a de la pièce de liaison 115. Il est sollicité vers la partie élargie 120 par le ressort 116. Un moyen de fixation 142 est agencé entre l'élément creux 113 et l'organe de butée 140, pour solidariser ces derniers. Plus précisément, l'organe de butée 140 a la forme d'un bobinot présentant une gorge annulaire 144 et l'élément de fixation 142 est engagé au travers d'un trou 146 de l'élément creux 113 de façon à faire saillie intérieurement en étant logé dans la gorge annulaire 144, après montage. L'élément de fixation 142 forme une sorte de cheville. Il comporte une tête 148, une portion terminale 149 dont le diamètre est sensiblement égal à la longueur de la gorge 144 et une portion de diamètre réduit 150 s'étendant entre la tête 148 et la portion terminale 149. La portion de diamètre réduit 150 est, après montage, engagée dans le trou 146 de l'élément 113, ce dernier étant d'un diamètre supérieur de façon que l'action du ressort 116 sur l'organe de butée 140 se traduise par le verrouillage de l'élément de fixation 142.

Les opérations d'assemblage sont illustrées par les figures 5 et 6. Elles nécessitent l'utilisation d'un outil 155 formant cale d'épaisseur prédéterminée et comportant une fente 156 susceptible de s'engager sur la tige 115a. On commence par mettre en place l'extrémité élargie 120 de l'élément de liaison 115 dans la cavité 132 de l'élément 112. Puis, on met en place l'élément de verrouillage 135 et on intercale l'extrémité de l'outil 155 entre l'extrémité de l'élément 112 et l'organe de butée 140 en forme de bobinot. C'est la situation illustrée à la figure 5. L'épaisseur de l'outil 155 est telle que lorsqu'on engage l'élément de liaison. et le ressort dans l'évidement cylindrique 136, la rainure 144 se trouve en correspondance du trou 146 de l'élément 113. Il suffit alors de mettre en place l'élément de fixation 142. C'est la situation illustrée à la figure 6b. Le retrait de l'outil 155 permet un léger déplacement de l'organe de butée 140, sous la sollicitation du ressort 116, ce qui déplace l'élément de fixation 142 et le verrouille dans la situation illustrée à la figure 6c.

A partir de ce moment, la charnière est montée. Comme le bord 138a de la cavité 138 comporte deux zones approximativement perpendiculaires entre elles (figure 4) on obtient deux positions stables de l'élément 113 par rapport à l'élément 112, constituant les deux positions d'utilisation normale de la charnière élastique. Néanmoins, comme mentionné précédemment, un pivotement supplémentaire vers l'extérieur de l'élément 113 est possible, en raison de la conformation particulière de la cavité 138. Ce pivotement supplémentaire est mis à profit si l'on désire démonter la charnière, comme illustré à la figure 7. Dans ce cas, on force l'élément 113 vers l'extérieur, ce qui permet de réintroduire l'outil 155 entre l'extrémité de l'élément 112 et l'organe de butée 140. Dans ces conditions, les éléments de la charnière reprennent la position illustrée à la figure 6b, ce qui permet d'extraire l'élément de fixation 142, après quoi tous les éléments de la charnière peuvent être démontés.

**Revendications**

1- Charnière élastique, notamment pour monture de lunettes, caractérisée en ce qu'elle comprend deux éléments creux (12, 13) pourvus d'évidements respectifs et comportant, à des extrémités respectives, des surfaces d'articulation (12a, 13a), en ce que les deux évidements (17, 18) débouchent par des orifices (17a, 18a) en regard l'un de l'autre, en ce qu'une pièce de liaison (15) est logée dans les deux évidements en traversant lesdits orifices, en ce qu'elle comporte une extrémité élargie (20) en butée contre une surface interne de l'un des évidements tandis que son autre extrémité est couplée à un ressort (16) logé dans l'autre évidement, ledit ressort étant monté avec contrainte initiale et de façon à solliciter les deux surfaces d'articulation en appui l'une contre l'autre, par l'intermédiaire de ladite pièce de liaison.

2- Charnière élastique selon la revendication 1, caractérisée en ce que les surfaces d'articulation (12a, 13a) précitées sont au moins en partie sensiblement cylindriques, l'une convexe et l'autre concave, en appui l'une contre l'autre et que lesdits évidements débouchent sur ces surfaces d'articulation.

3- Charnière selon la revendication 2, caractérisée en ce que ladite pièce de liaison (15) a essentiellement la forme d'une tige, en ce que ledit ressort (16) est un ressort hélicoïdal monté sur ladite tige et en compression entre une surface d'extrémité de l'évidement (18) dans lequel il est logé et une butée (25) solidaire de ladite tige.

4- Charnière selon la revendication 3, caractérisée en ce que ladite butée (25) est constituée par un écrou vissé sur une portion d'extrémité filetée (26) de ladite tige.

5- Charnière selon la revendication 3, caractérisée en ce que ladite extrémité élargie de la pièce de liaison (15) a une forme sensiblement sphérique et en ce que la surface interne dudit évidement sur laquelle elle prend appui a une forme sensiblement sphérique correspondante.

6- Charnière selon l'une des revendications 2 à 5, caractérisée en ce que l'orifice (17a) dudit évidement dans lequel est engagée l'extrémité élargie de la pièce de liaison se prolonge latéralement par une fente.

7- Charnière selon l'une des revendications 2 à 6, caractérisée en ce que les surfaces d'articulation (17a, 18a) des deux éléments sont prolongées latéralement par des épaulements ou surfaces de butée analogues, coopérant deux à deux pour définir l'angle de pivotement d'un élément par rapport à l'autre.

8- Charnière selon l'une des revendications 2 à 7, caractérisée en ce que lesdites surfaces d'articulation sont conformées pour présenter au moins un épaulement (30a, 30b) s'étendant transversalement par rapport à l'axe commun de leurs parties cylindriques en contact, pour éviter le glissement des deux éléments l'un par rapport à l'autre suivant cet axe.

9- Charnière selon la revendication 8, caractérisée en ce que lesdites surfaces d'articulation sont conformées pour présenter deux tels épaulements (30a, 30b) s'étendant de part et d'autre de ladite pièce de liaison (15).

10- Charnière élastique selon la revendication 1, caractérisée en ce que l'un des éléments creux (112) précités comporte un évidement (117) ouvert latéralement, comprenant une cavité (132) conformée et dimensionnée pour accueillir ladite extrémité élargie et prolongée par une fente (134) permettant le débattement de ladite pièce de liaison, en ce qu'un élément de verrouillage (135), par exemple en forme de bague, est monté à l'extrémité de cet élément creux pour maintenir ladite extrémité élargie dans ledit évidement, en ce qu'un organe de butée (140) est monté coulissant sur ladite pièce de liaison et est sollicité vers ladite partie élargie par ledit ressort et en ce qu'un moyen de fixation (142) est agencé entre l'autre élément creux (113) précité et ledit organe de butée (140) pour solidariser ces derniers.

11- Charnière élastique selon la revendication 10, caractérisée en ce que lesdites surfaces d'articulation sont respectivement constituées par les bords en contact de l'organe de verrouillage (135) et dudit autre élément creux (113).

12- Charnière élastique selon la revendication 10 ou 11, caractérisée en ce que ledit organe de butée (140) a la forme d'un bobinot muni d'une gorge annulaire (144) et en ce que ledit élément de fixation (142) est engagé au travers d'un trou (146) dudit autre élément creux (113) et fait saillie intérieurement dans ladite gorge annulaire (144).

13- Charnière élastique selon la revendication 12, caractérisée en ce que ledit élément de fixation (142) forme une cheville comportant une portion de diamètre réduit (150), cette portion étant normalement engagée dans ledit trou (146) de l'autre élément creux (113), ce trou étant d'un diamètre plus grand que celui de ladite portion de diamètre réduit de façon que l'action dudit ressort sur ledit organe de butée entraîne le verrouillage dudit élément de fixation.

14- Charnière élastique selon l'une des revendications 10 à 13, caractérisée en ce que ledit autre élément creux (113) comporte à son extrémité, une cavité (138) ouverte latéralement, dont le bord d'ouverture présente des parties sensiblement perpendiculaires entre elles.

## FIG.1

## FIG.2

## FIG.3

FIG.4

FIG.5

FIG.6a

FIG.6b

FIG.6c

FIG.7

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0 003 928 (ETABLISSEMENTS AUGUSTE LAMY & FILS) <br> * Revendications * <br> --- | 1-4 | G 02 C   5/22 |
| A | FR-A-2 609 816 (CHEVASSUS) <br> * Revendications * <br> --- | 1-3 | |
| A | FR-A-2 535 070 (LUNETTERIE HENRY JULIEN) <br> * Revendications * <br> --- | 1-3 | |
| A | FR-A-2 246 883 (LA MECCANOPTICA LEONARDO S.p.A.) <br> * Revendications * <br> --- | 1 | |
| A | FR-A-2 466 788 (OBE-WERK OHNMACHT & BAUMGARTNER) <br> * Revendications * <br> --- | 1 | |
| A | FR-A-2 028 893 (LA MECCANOPTICA LEONARDO S.p.A.) <br> * Revendications * <br> ----- | 1 | **DOMAINES TECHNIQUES RECHERCHES (Int. Cl.5)** <br><br> G 02 C   5/22 |

Le présent rapport a été établi pour toutes les revendications

| Lieu de la recherche | Date d'achèvement de la recherche | Examinateur |
|---|---|---|
| LA HAYE | 04-02-1991 | CALLEWAERT-HAEZEBROUCK H |